(19) **Europäisches Patentamt / European Patent Office / Office européen des brevets**

(11) **EP 4 066 961 A1**

(12) **EUROPEAN PATENT APPLICATION**
published in accordance with Art. 153(4) EPC

(43) Date of publication:
**05.10.2022 Bulletin 2022/40**

(21) Application number: **20894667.3**

(22) Date of filing: **28.10.2020**

(51) International Patent Classification (IPC):
**B22D 7/12** (2006.01)    **B22D 11/106** (2006.01)

(52) Cooperative Patent Classification (CPC):
**B22D 7/12; B22D 11/106;** Y02P 10/20

(86) International application number:
**PCT/JP2020/040513**

(87) International publication number:
**WO 2021/106484 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.11.2019 JP 2019217467**

(71) Applicant: **JFE Steel Corporation**
**Tokyo 100-0011 (JP)**

(72) Inventors:
• **WATANABE, Yusuke**
  **Tokyo 100-0011 (JP)**

• **TANAKA, Takanori**
  **Tokyo 100-0011 (JP)**
• **HASEGAWA, Takashi**
  **Tokyo 100-0011 (JP)**
• **YAMAUCHI, Takashi**
  **Tokyo 100-0011 (JP)**
• **MATSUI, Akitoshi**
  **Tokyo 100-0011 (JP)**
• **HARADA, Akifumi**
  **Tokyo 100-0011 (JP)**
• **UEHARA, Hirohide**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **METHOD FOR CASTING MOLTEN STEEL, METHOD FOR PRODUCING CONTINUOUS CAST SLAB, AND METHOD FOR PRODUCING STEEL FOR BEARING**

(57) There are provided a method for casting molten steel, a method for producing a continuously cast piece, and a method for producing a steel material for a bearing, that can suppress a gas-liquid reaction between molten steel and oxygen in the air. A method for casting molten steel using a continuous casting facility includes: a replacement step of blowing a replacement gas containing at least a combustible gas into a tundish (1) under an incomplete combustion condition to replace a gas in the tundish (1), the tundish (1) being an intermediate vessel in the continuous casting facility; and after the replacement step, a casting step of stopping blowing the replacement gas and performing continuous casting in the continuous casting facility by using the tundish (1) without blowing the replacement gas into the tundish (1).

FIG. 1

EP 4 066 961 A1

## Description

Technical Field

The present invention relates to a method for casting molten steel, a method for producing a continuously cast piece, and a method for producing a steel material for a bearing.

Background Art

Various active elements such as Si, Mn, Al, and Ti are added to steel products according to uses of the products. However, for example, when the surface of molten steel is contaminated due to exposure to the air, or the like, such an alloy element reacts with oxygen or nitrogen in the air to produce an oxide or a nitride. There are cases where the oxide or the nitride becomes a large nonmetallic inclusion so as to be a flaw in a product through a rolling process or to adversely affect the fatigue life of the product. Therefore, it is important to obtain molten steel with high cleanliness in a secondary refining stage and simultaneously to prevent contamination of the molten steel after the secondary refining. In particular, in the case of casting molten steel in a continuous casting facility, as will be described later, contamination is prone to occur in a tundish serving as an intermediate vessel into which molten steel is poured. As the contamination form of the molten steel in the tundish, there can be cited, mainly, one in which a metal remaining in a tundish is oxidized to an oxide in the preheating before use of a next charge, leading to contamination due to contact of this oxide with molten steel, and one in which contamination occurs due to contact between the air flowing into a tundish and molten steel in casting. For these reasons, the following technologies for preventing contamination of molten steel in a tundish are proposed.

For example, PTL 1 and PTL 2 each disclose a preheating method for a tundish that is repeatedly used in the heat. According to these technologies, it is described that when a burner used in preheating is burned with an amount of air (an amount of oxygen) less than a stoichiometric amount of air for fuel (an amount of oxygen necessary for complete combustion of fuel) supplied to the burner, it is possible to facilitate dissolution/removal of a metal remaining in a tundish or to prevent oxidation thereof.

On the other hand, as a technology that reduces a gas-liquid reaction between molten steel and the air in a tundish at the time of casting, PTL 3 discloses a method for reducing a gas-liquid reaction between molten steel and the air in a tundish by purging the inside of the tundish with argon being an inert gas. Further, PTL 4 discloses a method for reducing a gas-liquid reaction between molten steel and the air in a tundish by purging the inside of the tundish with nitrogen being a less expensive inert gas in the case of taking into account only an oxide as a nonmetallic inclusion that is a concern on the quality.

Further, PTL 5 discloses a technology that, before pouring molten steel into a tundish, heats the inside of the tundish by enriching oxygen in combustion air and burning a fuel gas at an air ratio of 0.75 to 0.98, and that continues to heat the tundish also after the molten steel is poured into the tundish.

Citation List

Patent Literature

PTL 1: JP H4-238656 A
PTL 2: JP H7-299548 A
PTL 3: JP 2010-24531 A
PTL 4: JP 2010-253485 A
PTL 5: JP H4-143047 A

Summary of Invention

Technical Problem

However, only by cleaning the tundish before the casting by the technologies of PTL 1 and PTL 2, the effect of reducing the nonmetallic inclusion is insufficient for the production of steel, particularly such as bearing steel, that is required high cleanliness. Therefore, it is essential to clean the tundish before the casting and simultaneously to prevent the contamination of molten steel at the time of the casting.

In the meantime, in general, a path of a gas for preheating refractories, openings for the purpose of temperature measurement/sampling of molten steel, and so on are machined and provided in a tundish in advance. Further, since deformation of an iron vessel in a high temperature environment such as molten steel is inevitable, it is difficult to industrially prevent the occurrence of a slight gap in a tundish.

In the methods described in PTL 3 and PTL 4, it is proposed to positively pressurize the inside of the tundish with the inert gas for removing the influence of the air mixed into the tundish. However, in a steel receiving portion of the tundish that receives molten steel poured from a ladle, the entrainment of the air following the free fall of the molten steel invariably occurs. In addition, there are cases where, in a portion where the purge gas is made to flow, the ambient air is attracted by the purge gas so that the flowing of the air into the tundish occurs.

On the other hand, according to the method described in PTL 5, when the heating of the tundish is continued also after the molten steel is poured into the tundish, the temperature of the gas phase in the tundish does not easily decrease. Consequently, the positive pressure in the tundish is easily maintained so that the entrainment of the air following the pouring of the molten steel decreases. However, there are cases where a trouble occurs in which splash generated from the poured molten steel adheres to a burner nozzle to cause breakage of a burner. Further, when it is attempted to maintain the positive pressure in the tundish while burning the fuel gas at the air ratio of 0.75 to 0.98, there is a danger in which a toxic gas such as CO is blown off to the outside of the tundish so that operators working in the surroundings are exposed to the toxic gas.

Therefore, particularly in a steel type that is severe with respect to an oxide in steel such as bearing steel, a method is required that further reduces a gas-liquid reaction between molten steel and oxygen in the air without a trouble of a facility, or the like.

In view of this, the present invention has been made paying attention to the problems described above and has an object to provide a method for casting molten steel, a method for producing a continuously cast piece, and a method for producing a steel material for a bearing, that can prevent an increase in oxygen concentration in a tundish particularly at the time of pouring molten steel at which the inflow of the air tends to occur, thereby suppressing a gas-liquid reaction between molten steel and oxygen in the air.

Solution to Problem

According to one aspect of the present invention, there is provided a method for casting molten steel using a continuous casting facility, the method for casting the molten steel including: a replacement step of blowing a replacement gas containing at least a combustible gas into a tundish under an incomplete combustion condition to replace a gas in the tundish, the tundish being an intermediate vessel in the continuous casting facility; and after the replacement step, a casting step of stopping blowing the replacement gas and performing continuous casting in the continuous casting facility by using the tundish without blowing the replacement gas into the tundish.

According to one aspect of the present invention, there is provided a method for casting molten steel using an ingot casting facility, the method for casting the molten steel including: a replacement step of blowing a replacement gas containing at least a combustible gas into a mold of the ingot casting facility under an incomplete combustion condition to replace a gas in the tundish; and after the replacement step, a casting step of stopping blowing the replacement gas and performing casting in the ingot casting facility by using the mold without blowing the replacement gas into the tundish.

Further, according to one aspect of the present invention, there is provided a method for producing a continuously cast piece in which molten steel tapped from a converter or an electric furnace is refined in a secondary refining facility, and the molten steel refined in the secondary refining facility is cast in a continuous casting facility to produce the continuously cast piece, the method for producing the continuously cast piece including: a replacement step of blowing a replacement gas containing at least a combustible gas into a tundish under an incomplete combustion condition to replace a gas in the tundish, the tundish being an intermediate vessel in the continuous casting facility; and after the replacement step, a casting step of stopping blowing the replacement gas and performing continuous casting in the continuous casting facility by using the tundish without blowing the replacement gas into the tundish, wherein, in the casting step, the continuous casting is started using the tundish containing a combustible gas component in an incomplete combustion state, and an oxygen concentration in a gas phase of the tundish is equal to or less than 2.0% in a period until a volume of the molten steel poured into the tundish reaches 60% of a capacity of the tundish.

Further, according to one aspect of the present invention, there is provided a method for producing a steel material for a bearing in which molten steel tapped from a converter or an electric furnace is refined in a secondary refining facility, and a material obtained by casting in a continuous casting facility the molten steel refined in the secondary refining facility is used to produce the steel material for the bearing, the method for producing the steel material for the bearing including: a replacement step of blowing a replacement gas containing at least a combustible gas into a tundish under an incomplete combustion condition to replace a gas in the tundish, the tundish being an intermediate vessel in the continuous casting facility; and after the replacement step, a casting step of stopping blowing the replacement gas and performing continuous casting in the continuous casting facility by using the tundish without blowing the replacement gas into the tundish, wherein, in the casting step, the continuous casting is started using the tundish containing a combustible gas component in an incomplete combustion state, and an oxygen concentration in a gas phase of the tundish is equal to or less than 2.0% in a period until a volume of the molten steel poured into the tundish reaches 60% of a capacity of the tundish.

Advantageous Effects of Invention

According to one aspect of the present invention, there are provided a method for casting molten steel, a method for producing a continuously cast piece, and a method for producing a steel material for a bearing, that can prevent an increase in oxygen concentration in a tundish particularly at the time of pouring molten steel, thereby suppressing a gas-liquid reaction between the molten steel and oxygen in the air.

Brief Description of Drawings

FIG. 1 is a plan view illustrating a tundish in this embodiment;
FIG. 2 is a schematic diagram illustrating an ingot casting facility in a modification; and
FIG. 3 is a graph illustrating the results of an Example.

Description of Embodiments

In the following detailed description, in order to provide a complete understanding of the present invention, an embodiment of the present invention is shown by way of example to describe a number of specific details. However, it is apparent that one or more embodiments can be implemented without such a description of the specific details. Further, for simplicity of the drawings, well-known structures and devices are schematically illustrated.

<Method for Casting Molten Steel>

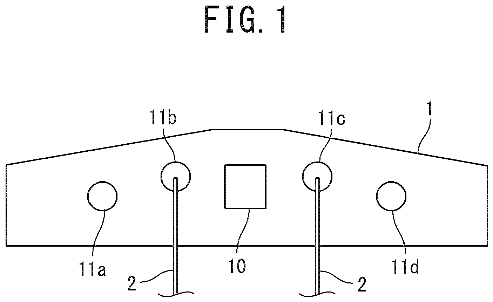

Referring to FIG. 1, a method for casting molten steel according to one embodiment of the present invention will be described. In this embodiment, refined molten steel is continuously cast using a continuous casting facility. The continuous casting facility may be one that is generally used in the casting of molten steel, and is not particularly limited. In the continuous casting using the continuous casting facility, molten steel contained in a ladle (not illustrated) is poured into a tundish 1 illustrated in FIG. 1, and thereafter, the molten steel is poured from the tundish 1 into a mold (not illustrated) so that a cast piece, such as a slab, a bloom, or a billet, having a desired shape is cast. As illustrated in FIG. 1, the tundish 1 has a pouring hole 10 and four stopper holes 11a to 11d that are formed in a top cover. The pouring hole 10 is an opening which is formed in the center of the top cover of the tundish 1 and through which a long nozzle (not illustrated) connected to the ladle is inserted. The four stopper holes 11a to 11d are holes formed side by side in a longitudinal direction of the tundish 1, and are openings through which four stoppers (not illustrated) are respectively inserted. The pouring hole 10 is formed between the center stopper holes 11b, 11c. The tundish 1 illustrated in FIG. 1 is provided in a continuous casting facility that casts cast pieces such as blooms using four strands. The positions of the four stopper holes 11a to 11d are provided corresponding to the positions of the respective strands in which molds are disposed. Further, the steel type of molten steel cast in this embodiment is bearing steel that needs to reduce an oxide as a nonmetallic inclusion.

(Heating Process)

In this embodiment, first, a heating process for heating the tundish 1 is performed. In the heating process, as illustrated in FIG. 1, gas supply pipes 2 are respectively provided to the two stopper holes 11b, 11c on the center side. The gas supply pipes 2 are pipes that supply (blow) an oxygen containing gas and a combustible gas, and their tips from which the gases are ejected are provided toward the inside of the tundish 1 from the two stopper holes 11b, 11c. The oxygen containing gas and the combustible gas are supplied to the gas supply pipes 2 from gas supply devices, and it is configured that their supply amounts (flow rates) can be individually adjusted. The combustible gas is, for example, a C gas being a combustible gas that is generated and recovered from a coke oven. The C gas contains a CO gas and various hydrocarbon gases being the combustible gas components and has a composition shown in Table 1, for example. The oxygen containing gas is air, for example.

[Table 1]

| CO$_2$ | C$_n$H$_m$ | CO | CH$_4$ |
|---|---|---|---|
| 2-5 | 2-4 | 5-8 | 25-30 |
| (mass%) | | | |

Then, in the heating process, the oxygen containing gas and the combustible gas are blown into the tundish 1 from the two stopper holes 11b, 11c to burn the combustible gas, thereby heating the inside of the tundish 1. In this event, the flow rate of the oxygen containing gas that is blown in for burning the combustible gas is adjusted so that the amount of oxygen contained in the oxygen containing gas becomes equal to or greater than an amount that can completely burn the combustible gas. Preferably, the oxygen containing gas is blown in along with the combustible gas under a condition in which the air ratio is equal to or greater than 1.4. Herein, the air ratio is a ratio of the amount of oxygen in an oxygen containing gas actually made to flow (the flow rate, the so-called use amount of oxygen) relative to the amount of oxygen in an oxygen containing gas that is stoichiometrically required for complete combustion of a blown-in combustible gas (the flow rate, the so-called stoichiometric amount of oxygen). In the case where the oxygen containing gas is air, the air ratio is a ratio of the amount of air actually made to flow (the flow rate, the so-called use amount of air) relative to the minimum amount of air that is stoichiometrically required for complete combustion of a blown-in combustible gas (the flow rate, the so-called stoichiometric amount of air) and takes the same value as described above. When the use amount of oxygen is equal to the stoichiometric amount of oxygen, the air ratio is 1. Stoichiometrically, a combustible gas is completely burned at the air ratio of 1, but actually, it is difficult to completely burn a combustible gas only with the stoichiometric amount of air, and therefore, air is generally supplied at an air ratio greater than 1 to achieve complete combustion. That is, actually, when the air ratio is equal to or greater than 1.4, the combustible gas is completely burned, and when the air ratio is less than 1.4, part of the combustible gas components remain unburned (incomplete combustion). When the temperature in the tundish 1 is lower than the ignition point of the combustible gas, the ignition does not occur naturally so that the ignition of the blown-in gas is performed using a fire.

The heating process is performed until shifting to a later-described replacement process. While the heating process is performed, the two stopper holes 11a, 11d and the pouring hole 10, to which the gas supply pipe 2 is not provided, may be provided with refractory lids.

(Replacement Process)

After the heating process, a replacement process is performed in which a replacement gas containing at least a combustible gas is blown into the tundish 1 under an incomplete combustion condition to replace a gas in the tundish 1.

The replacement gas is a gas that is blown into the tundish 1 from the two gas supply pipes 2 in the replacement process, and is preferably a mixture of a combustible gas and an oxygen containing gas. In this case, the amount of the oxygen containing gas contained in the replacement gas is set to be smaller than an amount necessary for complete combustion of the combustible gas contained in the replacement gas. That is, the incomplete combustion condition is a blowing condition in which the amount of oxygen in the replacement gas is set to be smaller than an amount necessary for complete combustion of the combustible gas to prevent complete combustion of the replacement gas. The air ratio of the replacement gas is preferably equal to or less than 1.3, and more preferably equal to or less than 1.0. With this configuration, part of the combustible gas is burned so that it is possible to suppress or prevent a reduction in temperature in the tundish 1 in the replacement process. The replacement gas may contain only the combustible gas. However, in the case where only the combustible gas is blown in as the replacement gas, since the combustion of the combustible gas is hard to occur, there is a possibility that the temperature in the tundish 1 is reduced. Therefore, it is preferable that the blowing of only the combustible gas as the replacement gas be performed only when the reduction in temperature causes no problem, such as when the gas blowing time in the replacement process is short, or when the temperature in the tundish 1 is sufficiently high.

The combustible gas is desirably a combustible gas with a specific gravity greater than air, and, for example, a propane gas is more preferable. Using a gas with a specific gravity greater than air as the combustible gas, the gas components of the combustible gas in the incomplete combustion state tend to stay in a lower portion of the tundish 1. Consequently, in a later-described casting process, the gas components of the combustible gas in the incomplete combustion state are not easily replaced/mixed with air entering the tundish 1 so that the state where molten steel is not easily oxidized tends to be maintained longer. The propane gas is greater in specific gravity than air, and is widely distributed as a fuel gas and thus can be easily obtained at a relatively low price.

It is preferable that the CO concentration contained in the combustible gas fall in a range in which oxidation of Fe does not occur based on an equilibrium relationship between the CO gas contained in the combustible gas and

Fe at a temperature in the tundish. If an Fe content such as an adhering metal is present in the tundish, there is a possibility that, depending on the composition of the combustible gas, this Fe content is oxidized even in the case of the blowing of only the combustible gas which is a condition in which oxidation of the Fe content is most unlikely to occur. Assuming that the later-described casting process is performed in the state where the Fe content is oxidized so that an oxide of Fe is present in the tundish, there occurs a possibility that the oxide of Fe reacts with Al in molten steel to cause reoxidation of Al. An oxidation reaction of Fe in a $COCO_2$ atmosphere is conceivable from formula (3) obtained from formula (1) and formula (2). Assuming formula (5), the equilibrium relationship of formula (3) is given as a function of a ratio of a CO partial pressure relative to a $CO_2$ partial pressure and a temperature as seen from formula (4). Herein, formulas of the literature ("Steel Refining" edited by Japan Institute of Metals and Materials, 2000, Maruzen) are used as $\Delta G_1$ and $\Delta G_2$. R is a gas constant (= 8.314 J/mol/K). Herein, $\Delta G_1$, $\Delta G_2$, and $\Delta G_3$ are respectively standard free energy changes (J) of reactions of formula (1), formula (2), and formula (3), T a temperature (K), $a_{Fe}$ an activity of Fe, $a_{FeO}$ an activity of FeO, $p_{CO}$ a CO partial pressure, $p_{CO2}$ a $CO_2$ partial pressure, and R a gas constant (= 8.314 J/mol/K). Further, (s) and (g) respectively represent a solid and a gas.

[Formula 1]

$$2Fe(s) + 2O_2(g) = 2FeO(s) \quad \Delta G_1 = -528{,}860 + 129.76T \quad \cdots (1)$$

$$2CO(g) + O_2(g) = 2CO_2 \quad \Delta G_2 = -565{,}160 - 172.03T \quad \cdots (2)$$

$$Fe(s) + CO_2(g) = FeO(s) + CO(g) \quad \Delta G_3 = 18{,}150 - 21.29T \quad \cdots (3)$$

$$K = \frac{a_{FeO} \cdot p_{CO}}{a_{Fe} \cdot p_{CO2}} \cong \frac{p_{CO}}{p_{CO2}} = \exp\left(-\frac{\Delta G_3}{RT}\right) \quad \cdots (4)$$

$$a_{Fe} = a_{FeO} \cong 1 \quad \cdots (5)$$

Assuming that the preheating temperature of the tundish is 1000°C, the value of the right side of formula (4) at 1000°C is calculated to be 1.3. That is, when the ratio of the CO partial pressure relative to the $CO_2$ partial pressure is equal to or greater than 1.3, the equilibrium of formula (3) proceeds to the left, thus resulting in a condition in which oxidation of Fe does not occur thermodynamically. Herein, as the $CO_2$ partial pressure and the CO partial pressure, the volume concentrations (vol%) in the combustible gas components in the standard state may be used, respectively. For example, in the case of bearing steel that is required a high cleanliness level, by ensuring the CO gas concentration in the combustible gas so that the CO partial pressure relative to the $CO_2$ partial pressure is made equal to or greater than 1.3, the reoxidation of Al in molten steel caused by an oxide of Fe produced in the replacement process is suppressed so that the high cleanliness is ensured. When the C gas with the components shown in Table 1 is used as the combustible gas, since the ratio of the CO partial pressure relative to the $CO_2$ partial pressure becomes equal to or greater than 1.3, use can be made without adjusting the components of the C gas.

The replacement process is performed until the gas components of the combustible gas in the incomplete combustion state remain in the tundish 1. The gas components of the combustible gas in the incomplete combustion state include a case of being contained as unburned (unreacted) gas components with the composition of the blown-in combustible gas remaining as it is, and also include a case of being contained as gas components of the composition of a gas with a degree of oxidation lower than the composition of a gas produced by complete combustion. Like the heating process, while the replacement process is performed, the two stopper holes 11a, 11d and the pouring hole 10, to which the gas supply pipe 2 is not provided, may be provided with the refractory lids.

(Casting Process)

After the replacement process, a casting process is performed that stops blowing the replacement gas and performs continuous casting of molten steel by using the tundish 1 without blowing the replacement gas into the tundish 1.

In the casting process, molten steel is poured from the ladle into the tundish 1 through the long nozzle (not illustrated) that is inserted through the pouring hole 10. Then, the molten steel is poured into the molds through submerged entry nozzles provided to the bottom surface of the tundish 1 at the positions of the strands so that the casting is performed.

In the casting process, following the pouring of the molten steel into the tundish 1, the entrainment of the air from the pouring hole 10 occurs so that the air flows into the tundish 1. Further, the inflow of the air occurs through gaps formed in the four stopper holes 11a to 11d and the tundish 1. In particular, at the time of the blowing of the replacement gas, since the pressure in the tundish 1 is kept positive, the inflow of the air through the gaps is suppressed, but, the inflow of the air through the gaps tends to occur after stopping the blowing of the replacement gas. However, in the casting process of this embodiment, the state is such that the gas components of the combustible gas in the incomplete combustion state are present in the tundish 1 due to the incomplete combustion of the replacement gas. Therefore, an oxygen gas in the air flowing into the tundish 1 at the beginning of the casting reacts with CO contained in the combustible gas by a reaction of formula (6) given below so that its reaction with Al in the molten steel is suppressed. Further, in the case where the combustible gas contains a hydrocarbon-based gas, since a reaction of formula (7) also occurs, it is possible to suppress a gas-liquid reaction between the molten steel and oxygen in the air.

$$CO + 1/2O_2 \rightarrow CO_2 \cdots \qquad (6)$$

$$C_mH_n + (m/2 + n/4)O_2 \rightarrow mCO_2 + n/2H_2O \cdots \qquad (7)$$

In the casting process, when a predetermined amount of molten steel is poured into the tundish 1, a covering material such as a tundish flux is put into the tundish 1. The put-in covering material is melted to cover the bath surface of the molten steel. Therefore, after the covering material is put in, the molten steel is shielded from an atmospheric gas in the tundish 1 so that the reoxidation of the molten steel is hard to occur. That is, when the state is provided where, as in this embodiment, the gas components of the combustible gas in the incomplete combustion state are present in the tundish 1 at the beginning of the casting, it is possible to suppress the reoxidation of the molten steel over the entire period of the casting process. Further, in this embodiment, the facility that is used for ejecting the replacement gas in the replacement process may be obtained only by changing the air ratio of the facility that is used in the heating process. Therefore, it is not necessary to introduce a new facility as in PTL 1 and PTL 2, and thus it is possible to prevent the reoxidation of the molten steel easily and inexpensively.

In this embodiment, in the casting process, the continuous casting is performed during its period in the state where the replacement gas is not blown into the tundish 1. With this configuration, it is possible to prevent the trouble that the splash generated from the molten steel poured into the tundish adheres to the burner nozzle to cause the breakage of the burner during the period of the casting process. In the casting process, an inert gas such as an Ar gas may be blown into the tundish in a range that does not cause the inflow of the air. The blowing of the inert gas such as the Ar gas is preferably performed at a low flow rate so as not to attract the air, and further, is preferably performed after the lapse of a certain time from the start of the casting, i.e. after the time at which the replacement gas or the combustible gas components in the incomplete combustion state are thought to be discharged to the outside of the tundish. Further, in the casting process, it is preferable to start the continuous casting in the state where the combustible gas components in the incomplete combustion state are contained in the tundish. As described before, following the pouring of the molten steel into the tundish 1, the entrainment of the air from the pouring hole 10 occurs so that the air flows into the tundish 1. However, when the combustible gas components in the incomplete combustion state are contained in the tundish 1, an oxygen gas in the air that has flowed in reacts with CO being the combustible gas component in the incomplete combustion state by the reaction of formula (6) given above so that its reaction with Al in the molten steel is suppressed.

In the casting process of this embodiment, it is preferable that the continuous casting be started using the tundish 1 containing therein the combustible gas components in the incomplete combustion state, and that the oxygen concentration in the gas phase of the tundish 1 be made equal to or less than 2.0% in a period until the volume of the molten steel poured into the tundish 1 reaches 60% of the capacity of the tundish 1. As described before, the reoxidation of the molten steel tends to occur at the beginning of the casting. Therefore, by starting the casting and maintaining the oxygen concentration in the tundish gas phase at a low value, i.e. equal to or less than 2.0%, in a period until the volume of the molten steel poured into the tundish 1 reaches 60% of the capacity of the tundish 1, while the gas components of the combustible gas in the incomplete combustion state remain in the tundish 1, the reoxidation of the molten steel in the casting process can be suppressed more reliably.

When the oxygen concentration in the gas phase of the tundish 1 exceeds 2.0% at a timing at which the volume of the molten steel poured into the tundish 1 is less than 60% of the capacity of the tundish 1, the specific surface area of the molten steel exposed to the air becomes large so that there is a possibility of occurrence of the reoxidation of the molten steel. As the volume of the molten steel poured into the tundish 1 increases with respect to the capacity of the tundish 1, the specific surface area of the molten steel exposed to the air decreases so that the possibility of the occurrence of the reoxidation of the molten steel decreases. Therefore, the upper limit is not set for the ratio of the volume of the molten steel poured into the tundish 1. Further, as the oxygen concentration in the gas phase of the tundish 1 decreases through the casting process, the possibility of the occurrence of the reoxidation of the molten steel decreases, and therefore, the lower limit is not set. On the other hand, when this oxygen concentration exceeds 2.0%, the possibility of the occurrence of the reoxidation of the molten steel is actualized, and therefore, the oxygen concentration is preferably set to 2.0% or less.

Further, when the period from the termination of the replacement process to the start of the casting process is equal to or less than 10 minutes, the pouring of the molten steel can be performed in the state where the combustible gas components in the incomplete combustion state are more contained in the tundish 1. That is, since the reoxidation of the molten steel in the casting process can be suppressed more reliably, it is more preferable to set the period from the termination of the replacement process to the start of the casting process to be equal to or less than 10 minutes. When the period from the termination of the replacement process to the start of the casting process is greater than 10 minutes, there is a possibility that the combustible gas components in the incomplete combustion state remaining in the tundish 1 are dispersed to the outside of the tundish 1 so that the effect of preventing the reoxidation of the molten steel decreases.

The time point at which the replacement process is terminated is the time point at which the supply of the replacement gas is stopped. The time point at which the casting process is started is the time point at which the pouring of the molten steel from the ladle into the tundish is started.

Further, in the case where a C gas generated in a coke oven of an ironworks is used as the combustible gas, this is excellent in operating cost. On the other hand, in the case where the propane gas is used as the combustible gas as described before, since the state where molten steel is not easily oxidized tends to be maintained longer, it is preferable to use the propane gas when the cleanliness of a product is more emphasized. In the casting process, molten steel is continuously cast so that a continuously cast piece of a predetermined shape is produced. Further, a steel material for a bearing may be produced using this continuously cast piece as a material. In this case, known technologies can be used for rolling of the continuously cast piece, finish machining of the steel material obtained by the rolling, and so on.

<Modification>

While the present invention has been described with reference to the specific embodiment, it is not intended to limit the invention by the description given above. By referring to the description of the present invention, the disclosed embodiment and also other embodiments of the present invention including various modifications are obvious for those skilled in the art. Therefore, it should be construed that the embodiments of the invention described in the claims also cover embodiments including modifications taken alone or in combination that are described in this description.

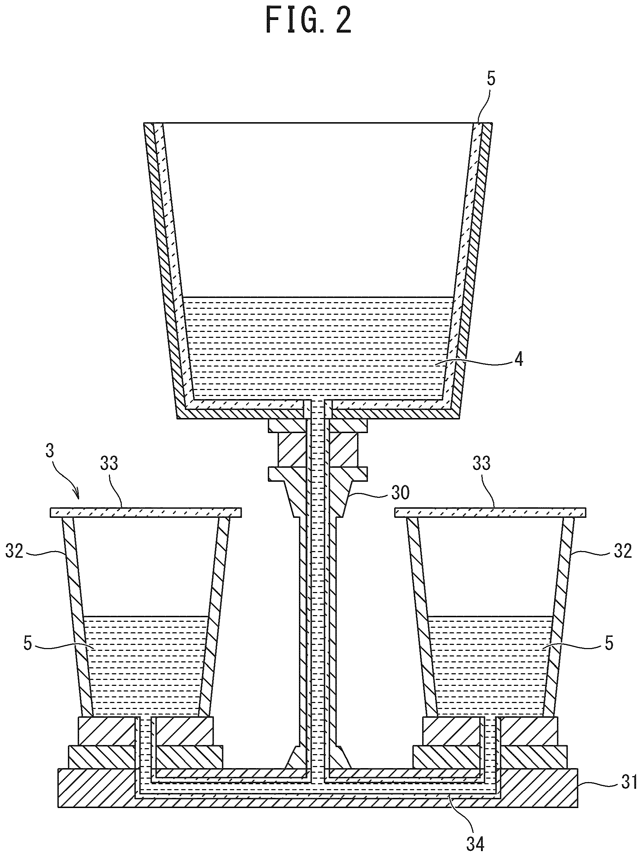

For example, in the above-described embodiment, the facility for performing the casting is the continuous casting facility, but the present invention is not limited to such an example. For example, the facility for performing the casting may be an ingot casting facility 3 illustrated in FIG. 2. The ingot casting facility 3 is a facility for casting an ingot by performing bottom pouring ingot casting of refined molten steel. The ingot casting facility 3 is a facility that is generally used in a bottom pouring ingot casting method and includes a pouring pipe 30, a surface plate 31, two molds 32, and two covers 33. In the ingot casting facility 3, the pouring pipe 30 and the two molds 32 are provided on the surface plate 31 such that a pouring path 34 in which molten steel 4 flows reaches the two molds 32 through the surface plate 31. The covers 33 are respectively provided on the two molds 32 for shielding from the air.

In the ingot casting facility 3 thus configured, the following casting method was performed conventionally. First, a replacement process is performed in which an inert gas is made to flow into the two molds 32 and the pouring path 34. Thereafter, a casting process is performed in which, after a ladle 5 in which the molten steel 4 is contained is disposed at an upper portion of the pouring pipe 30, the molten steel 4 is poured from the pouring pipe 30 to flow into the two molds 32 through the pouring path 34. In such a casting method, by blowing a replacement gas into the two molds 32 and the pouring path 34 in the replacement process like in the above-described embodiment, it is possible to reduce an oxygen gas contained in the air flowing into the molds 32 through gaps between the molds 32 and the covers 33 and in the air entrained at the time of the pouring into the pouring pipe 30. In terms of the workability and the simplicity of the facility, the replacement gas may be blown in only from upper portions of the two molds 32. Differently from the continuous casting facility 1, since it is not necessary to heat the molds 32 to a high temperature, only a combustible gas may be used as the replacement gas. Consequently, it is possible to cast an ingot in which an oxide inclusion is reduced. The ingot casting facility 3 illustrated in FIG. 2 is one example, and the shape, the number of the molds, and so on can be changed as appropriate.

Further, in the above-described embodiment, the C gas generated in the coke oven is used as the combustible gas, but the present invention is not limited to such an example. The combustible gas may be another one as long as it reacts with an oxygen gas to burn. For example, the combustible gas may be a hydrocarbon gas or a CO gas. As described before, when, among hydrocarbon gases, a gas with a specific gravity greater than air, like the propane gas, is used as the combustible gas, the state where molten steel is not easily oxidized tends to be maintained longer. Therefore, it is preferable to use the propane gas when the cleanliness of a product is more emphasized. Since hydrogen is contained in the hydrocarbon gas, there is a possibility that the hydrogen concentration in molten steel increases. Therefore, in the case of a steel type that is severe with respect to the hydrogen concentration, it is preferable that the type and concentration of hydrocarbon to be used be adjusted as appropriate based on the allowable upper limit of the hydrogen concentration and the hydrogen concentration in molten steel.

Further, in the above-described embodiment, the continuous casting facility includes the tundish 1 of the shape illustrated in FIG. 1, but the present invention is not limited to such an example. As long as the continuous casting facility is a general one, there is no particular limitation. Therefore, the shape of the tundish 1 and the number of the strands may be other than those illustrated in FIG. 1.

Further, in the above-described embodiment, the steel type of molten steel is the bearing steel, but the present invention is not limited to such an example. The steel type of molten steel may be another steel type as long as the reoxidation of an active element such as Si, Mn, Al, or Ti in molten steel by an oxygen gas is of concern.

Further, in the above-described embodiment, the heating process is performed, but the present invention is not limited to such an example. For example, when the tundish 1 is sufficiently heated, such as when the tundish 1 is reused, the replacement process and subsequent processes may be performed without performing the heating process.

Further, in the above-described embodiment, the replacement gas is blown in from the two stopper holes 11b, 11c, but the present invention is not limited to such an example. The replacement gas may be supplied through a hole other than the two stopper holes 11b, 11c, for example, the pouring hole 10, the stopper hole 11a, 11d, or another hole provided for temperature measurement or sampling.

<Advantageous Effects of Embodiment>

(1) A method for casting molten steel according to one aspect of the present invention is a method for casting molten steel using a continuous casting facility, the method including: a replacement step of blowing a replacement gas containing at least a combustible gas into a tundish 1 under an incomplete combustion condition to replace a gas in the tundish 1, the tundish 1 being an intermediate vessel in the continuous casting facility; and after the replacement step, a casting step of stopping blowing the replacement gas and performing continuous casting in the continuous casting facility by using the tundish 1 without blowing the replacement gas into the tundish 1.

According to the above-described configuration (1), at the time of pouring molten steel into the tundish 1, a gas component of the combustible gas in an incomplete combustion state is present in the tundish 1. Therefore, an oxygen gas in the air that has flowed in through a pouring hole, a gap, and so on reacts with the gas component of the combustible gas in the incomplete combustion state to suppress a gas-liquid reaction between the molten steel and oxygen in the air, and therefore, the reoxidation of the molten steel is suppressed.

(2) In the above-described configuration (1), in the casting step, the tundish 1 containing a combustible gas component in an incomplete combustion state is used.

(3) In the above-described configuration (2), in the casting step, the continuous casting is started using the tundish 1 containing the combustible gas component in the incomplete combustion state, and an oxygen concentration in a gas phase of the tundish 1 is equal to or less than 2.0% in a period until a volume of the molten steel poured into the tundish 1 reaches 60% of a capacity of the tundish 1.

According to the above-described configuration (3), the reoxidation of the molten steel can be suppressed more reliably.

(4) In the above-described configuration (2) or (3), a period from a termination of the replacement step to a start of the casting step is equal to or less than 10 minutes.

According to the above-described configuration (4), it is possible to suppress the dispersion of the combustible gas component in the incomplete combustion state remaining in the tundish 1 to the outside of the tundish 1 so that the reoxidation of the molten steel can be suppressed more reliably.

(5) In any one of the above-described configurations (1) to (4), in the replacement step, a gas containing at least the combustible gas and an oxygen containing gas is used as the replacement gas.

According to the above-described configuration (5), in the replacement step, part of the replacement gas is burned so that it is possible to suppress or prevent a reduction in temperature in the tundish 1.

(6) In the above-described configuration (5), in the replacement step, an air ratio being a ratio of a flow rate of oxygen in the oxygen containing gas in the actually blown-in replacement gas relative to a flow rate of oxygen stoichiometrically required for complete combustion of the combustible gas in the replacement gas is set to be equal to or less than 1.3.

(7) In the above-described configuration (6), in the replacement step, the air ratio is set to be equal to or less than 1.0.

According to the above-described configuration (6) or (7), in the replacement step, part of the replacement gas is burned so that it is possible to suppress or prevent a reduction in temperature in the tundish 1 more effectively.

(8) In any one of the above-described configurations (5) to (7), the oxygen containing gas is air.

According to the above-described configuration (8), the facility configuration can be simplified so that it is possible to reduce the cost required for the oxygen containing gas.

(9) In any one of the above-described configurations (1) to (8), the combustible gas used in the replacement step is a combustible gas with a specific gravity greater than air.

According to the above-described configuration (9), the gas component of the combustible gas in the incomplete combustion state is not easily replaced/mixed with air entering the tundish 1 so that the state where the molten steel is not easily oxidized tends to be maintained longer.

(10) In the above-described configuration (9), the combustible gas is a propane gas.

(11) In any one of the above-described configurations (1) to (10), a CO concentration contained in the combustible gas is set to fall in a range in which oxidation of Fe does not occur based on an equilibrium relationship between a CO gas contained in the combustible gas and the Fe at a temperature in the tundish.

According to the above-described configuration (11), the oxidation of Fe by $CO_2$ can be suppressed so that it is possible to further reduce the reoxidation of Al in the molten steel in the casting step.

(12) In any one of the above-described configurations (1) to (11), a ratio of a CO partial pressure relative to a $CO_2$ partial pressure in the replacement gas is equal to or greater than 1.3.

According to the above-described configuration (12), it is possible to suppress the oxidation of Fe by $CO_2$ in high quality bearing steel, for example.

(13) A method for casting molten steel according to one aspect of the present invention is a method for casting molten steel 4 using an ingot casting facility 3, the method including: a replacement step of blowing a replacement gas containing at least a combustible gas into a mold 32 of the ingot casting facility 3 under an incomplete combustion condition to replace a gas in the mold 32; and after the replacement step, a casting step of stopping blowing the replacement gas and performing casting in the ingot casting facility by using the mold 32 without blowing the replacement gas into the mold.

According to the above-described configuration (13), even in the ingot casting facility 3 as illustrated in FIG. 2, it is possible to suppress the reoxidation of the molten steel 4 for the same reason as the above-described configuration (1).

(14) A method for producing a continuously cast piece according to one aspect of the present invention is a method for producing a continuously cast piece in which molten steel tapped from a converter or an electric furnace is refined in a secondary refining facility, and the molten steel refined in the secondary refining facility is cast in a continuous casting facility to produce the continuously cast piece, the method including: a replacement step of blowing a replacement gas containing at least a combustible gas into a tundish 1 under an incomplete combustion condition to replace a gas in the tundish 1, the tundish 1 being an intermediate vessel in the continuous casting facility; and after the replacement step, a casting step of stopping blowing the replacement gas and performing continuous casting in the continuous casting facility by using the tundish 1 without blowing the replacement gas into the tundish, wherein, in the casting step, the continuous casting is started using the tundish containing a combustible gas component in an incomplete combustion state, and an oxygen concentration in a gas phase of the tundish 1 is equal to or less than 2.0% in a period until a volume of the molten steel poured into the tundish 1 reaches 60% of a capacity of the tundish 1.

According to the above-described configuration (14), it is possible to produce a continuously cast piece with high cleanliness for the same reason as the above-described configuration (1).

(15) In the above-described configuration (14), the continuously cast piece is a continuously cast piece to be a material of bearing steel.

According to the above-described configuration (15), it is possible to produce a continuously cast piece to be a material of bearing steel with high cleanliness for the same reason as the above-described configuration (1).

(16) A method for producing a steel material for a bearing according to one aspect of the present invention is a method for producing a steel material for a bearing in which molten steel tapped from a converter or an electric furnace is refined in a secondary refining facility, and a material obtained by casting in a continuous casting facility the molten steel refined in the secondary refining facility is used to produce the steel material for the bearing, the method including: a replacement step of blowing a replacement gas containing at least a combustible gas into a tundish 1 under an incomplete combustion condition to replace a gas in the tundish 1, the tundish 1 being an intermediate vessel in the continuous casting facility; and after the replacement step, a casting step of stopping blowing the replacement gas and performing continuous casting in the continuous casting facility by using the tundish 1 without blowing the replacement gas into the tundish, wherein, in the casting step, the continuous casting is started using the tundish 1 containing a combustible gas component in an incomplete combustion state, and an oxygen concentration in a gas phase of the tundish 1 is equal to or less than 2.0% in a period until a volume of the molten steel poured into the tundish 1 reaches 60% of a capacity of the tundish 1.

According to the above-described configuration (16), it is possible to produce a steel material for a bearing with high cleanliness for the same reason as the above-described configuration (1).

Examples

An Example performed by the present inventors will be described. In the Example, the molten steel casting method according to the above-described embodiment was used when a continuously cast piece as a material of bearing steel defined by JIS (Japanese Industrial Standards) G4805 as SUJ2 was cast in a continuous casting facility being a bloom continuous casting machine including the tundish 1 as in the above-described embodiment.

In the Example, first, as a heating process, a mixture of a C gas and air was burned to preheat the inside of the tundish 1 with a content of 20 t (capacity: 3.6 m$^3$) for 180 minutes. In this event, the C gas flow rate was set to 10 Nm$^3$/min. While the stoichiometric amount of air for this C gas flow rate is 30 Nm$^3$/min, the air flow rate to be supplied was set to 42 Nm$^3$/min for complete combustion of the C gas. That is, the air ratio was set to 1.4, i.e. 1.4 times the amount of air that is stoichiometrically required for complete combustion of the C gas. Molten steel was applied in advance with a hot metal pretreatment (dephosphorization/desulfurization), a converter (decarburization/dephosphorization), an LF (slag making in ladle), and an RH degassing (inclusion floating) treatment.

After the heating process, a replacement process was performed in which a replacement gas was blown into the tundish 1. In the replacement process, the C gas and the air made to flow in the heating process were respectively set to 10 Nm$^3$/min and 30 Nm$^3$/min and thus were made to flow into the tundish 1 as the replacement gas at the flow rates such that the air ratio was reduced from 1.4 to 1.0. In the replacement process, the time for which the replacement gas was made to flow in was 5 minutes.

The molten steel was poured into the tundish 1 after the replacement process, i.e. after 5 minutes from stopping the blowing of the replacement gas, and continuous casting was performed, thereby performing a casting process. In the casting process, the oxygen concentration in the gas phase in the tundish 1 was measured in a period from the start of the pouring of the molten steel until the molten steel corresponding to the content (20 t) of the tundish 1 was poured in. The oxygen concentration in the tundish 1 was 0.3% at the start of the pouring and 0.2% at a time point at which the molten steel (18 t), i.e. 90% of the tundish content, was poured in. Further, in the casting process, at the stage where the molten steel corresponding to the content (20 t) of the tundish 1 was poured in, the molten steel was sampled, and the total oxygen amount and the total nitrogen amount in the molten steel were analyzed. Prior to the continuous casting, also at the termination of the RH degassing treatment, i.e. at the stage where the refining treatment was completed, the molten steel was sampled, and the total oxygen amount and the total nitrogen amount in the molten steel at the termination of the RH degassing treatment were analyzed. Then, from the respective analysis results, the pickup amounts of total oxygen and total nitrogen from the termination of the RH degassing treatment to the time of pouring the 20 t molten steel were examined. The pickup amounts of total oxygen and total nitrogen are the amounts of changes of the respective analysis values from the termination of the RH degassing treatment to the time of pouring the 20 t molten steel.

In the Example, as a Comparative Example, a conventional casting method that performs a casting process after a heating process without performing a replacement process was also performed to examine the pickup amounts of total oxygen and total nitrogen. The conditions of the heating process and the casting process in the Comparative Example were set to the same as in the Example. In the Comparative Example, the oxygen concentration in the tundish 1 was 3.4% at the start of the pouring and 4% at a time point at which the molten steel (18 t), i.e. 90% of the tundish content, was poured in.

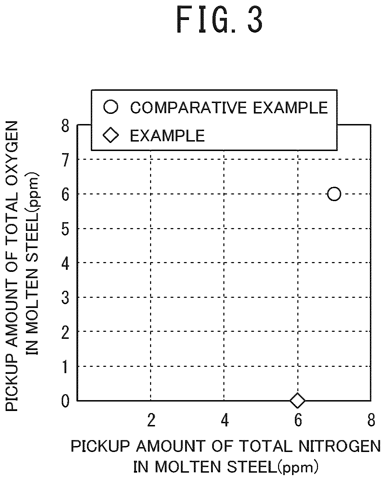

FIG. 3 illustrates the examination results of the pickup amounts of total oxygen and total nitrogen in the Example and the Comparative Example. As illustrated in FIG. 3, it was confirmed that while the pickup amounts of total nitrogen were similar to each other in the Example and the Comparative Example, the pickup amount of total oxygen was 10 ppm in the Comparative Example and 0 ppm in the Example and thus was significantly reduced in the Example. This suggests that oxygen in the air mixed into the tundish 1 was consumed by a combustion reaction with the combustible gas.

Reference Signs List

| | |
|---|---|
| 1 | tundish |
| 10 | pouring hole |
| 11a to 11d | stopper holes |
| 2 | gas supply pipe |
| 3 | ingot casting facility |
| 30 | pouring pipe |
| 31 | surface plate |
| 32 | mold |
| 33 | cover |
| 34 | pouring path |

4        molten steel

5        ladle

**Claims**

1. A method for casting molten steel using a continuous casting facility, the method for casting the molten steel comprising:

   a replacement step of blowing a replacement gas containing at least a combustible gas into a tundish under an incomplete combustion condition to replace a gas in the tundish, the tundish being an intermediate vessel in the continuous casting facility; and
   after the replacement step, a casting step of stopping blowing the replacement gas and performing continuous casting in the continuous casting facility by using the tundish without blowing the replacement gas into the tundish.

2. The method for casting the molten steel according to claim 1, wherein, in the casting step, the tundish containing a combustible gas component in an incomplete combustion state is used.

3. The method for casting the molten steel according to claim 2, wherein, in the casting step, the continuous casting is started using the tundish containing the combustible gas component in the incomplete combustion state, and an oxygen concentration in a gas phase of the tundish is equal to or less than 2.0% in a period until a volume of the molten steel poured into the tundish reaches 60% of a capacity of the tundish.

4. The method for casting the molten steel according to claim 2 or 3, wherein a period from a termination of the replacement step to a start of the casting step is equal to or less than 10 minutes.

5. The method for casting the molten steel according to any one of claims 1 to 4, wherein, in the replacement step, a gas containing at least the combustible gas and an oxygen containing gas is used as the replacement gas.

6. The method for casting the molten steel according to claim 5, wherein, in the replacement step, an air ratio being a ratio of a flow rate of oxygen in the oxygen containing gas in the replacement gas relative to a flow rate of oxygen stoichiometrically required for complete combustion of the combustible gas in the replacement gas is set to be equal to or less than 1.3.

7. The method for casting the molten steel according to claim 6, wherein, in the replacement step, the air ratio is set to be equal to or less than 1.0.

8. The method for casting the molten steel according to any one of claims 5 to 7, wherein the oxygen containing gas is air.

9. The method for casting the molten steel according to any one of claims 1 to 8, wherein the combustible gas is a combustible gas with a specific gravity greater than air.

10. The method for casting the molten steel according to claim 9, wherein the combustible gas is a propane gas.

11. The method for casting the molten steel according to any one of claims 1 to 10, wherein a CO concentration contained in the combustible gas is set to fall in a range in which oxidation of Fe does not occur based on an equilibrium relationship between a CO gas contained in the combustible gas and the Fe at a temperature in the tundish.

12. The method for casting the molten steel according to any one of claims 1 to 11, wherein a ratio of a CO partial pressure relative to a $CO_2$ partial pressure in the replacement gas is equal to or greater than 1.3.

13. A method for casting molten steel using an ingot casting facility, the method for casting the molten steel comprising:

   a replacement step of blowing a replacement gas containing at least a combustible gas into a mold of the ingot casting facility under an incomplete combustion condition to replace a gas in the mold; and
   after the replacement step, a casting step of stopping blowing the replacement gas and performing casting in the ingot casting facility by using the mold without blowing the replacement gas into the mold.

14. A method for producing a continuously cast piece in which molten steel tapped from a converter or an electric furnace is refined in a secondary refining facility, and the molten steel refined in the secondary refining facility is cast in a continuous casting facility to produce the continuously cast piece, the method for producing the continuously cast piece comprising:

a replacement step of blowing a replacement gas containing at least a combustible gas into a tundish under an incomplete combustion condition to replace a gas in the tundish, the tundish being an intermediate vessel in the continuous casting facility; and

after the replacement step, a casting step of stopping blowing the replacement gas and performing continuous casting in the continuous casting facility by using the tundish without blowing the replacement gas into the tundish, wherein, in the casting step, the continuous casting is started using the tundish containing a combustible gas component in an incomplete combustion state, and an oxygen concentration in a gas phase of the tundish is equal to or less than 2.0% in a period until a volume of the molten steel poured into the tundish reaches 60% of a capacity of the tundish.

15. The method for producing the continuously cast piece according to claim 14, wherein the continuously cast piece is a continuously cast piece to be a material of a steel material for a bearing.

16. A method for producing a steel material for a bearing in which molten steel tapped from a converter or an electric furnace is refined in a secondary refining facility, and a material obtained by casting in a continuous casting facility the molten steel refined in the secondary refining facility is used to produce the steel material for the bearing, the method for producing the steel material for the bearing comprising:

a replacement step of blowing a replacement gas containing at least a combustible gas into a tundish under an incomplete combustion condition to replace a gas in the tundish, the tundish being an intermediate vessel in the continuous casting facility; and

after the replacement step, a casting step of stopping blowing the replacement gas and performing continuous casting in the continuous casting facility by using the tundish without blowing the replacement gas into the tundish, wherein, in the casting step, the continuous casting is started using the tundish containing a combustible gas component in an incomplete combustion state, and an oxygen concentration in a gas phase of the tundish is equal to or less than 2.0% in a period until a volume of the molten steel poured into the tundish reaches 60% of a capacity of the tundish.

# FIG. 1

# FIG. 2

# FIG. 3

## INTERNATIONAL SEARCH REPORT

| | International application No. |
|---|---|
| | PCT/JP2020/040513 |

A. CLASSIFICATION OF SUBJECT MATTER
Int.Cl. B22D7/12(2006.01)i, B22D11/106(2006.01)i
FI: B22D11/106A, B22D7/12B, B22D11/106B

According to International Patent Classification (IPC) or to both national classification and IPC

B. FIELDS SEARCHED

Minimum documentation searched (classification system followed by classification symbols)
Int.Cl. B22D7/12, B22D11/106

Documentation searched other than minimum documentation to the extent that such documents are included in the fields searched
  Published examined utility model applications of Japan  1922-1996
  Published unexamined utility model applications of Japan  1971-2020
  Registered utility model specifications of Japan  1996-2020
  Published registered utility model applications of Japan  1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-158101 A (SUMITOMO METAL INDUSTRIES, LTD.) 13 June 2000 (2000-06-13), entire text | 1-16 |
| A | JP 08-159664 A (KAWASAKI STEEL CORP.) 21 June 1996 (1996-06-21), entire text | 1-16 |
| A | JP 07-308741 A (SUMITOMO METAL INDUSTRIES, LTD.) 28 November 1995 (1995-11-28), entire text | 1-16 |
| A | JP 2003-266157 A (FURUKAWA ELECTRIC CO., LTD.) 24 September 2003 (2003-09-24), entire text | 1-16 |
| P, X<br>P, A | JP 2020-032442 A (JFE STEEL CORPORATION) 05 March 2020 (2020-03-05), claims 1-5, paragraphs [0033]-[0036] | 1, 2, 4-9, 13<br>3, 10-12, 14-16 |

☐   Further documents are listed in the continuation of Box C.    ☒   See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
|  18 November 2020 |  08 December 2020 |

| Name and mailing address of the ISA/ | Authorized officer |
|---|---|
|  Japan Patent Office<br> 3-4-3, Kasumigaseki, Chiyoda-ku,<br> Tokyo 100-8915, Japan | <br><br>Telephone No. |

Form PCT/ISA/210 (second sheet) (January 2015)

**INTERNATIONAL SEARCH REPORT**
Information on patent family members

| International application No. |
| --- |
| PCT/JP2020/040513 |

| | | |
| --- | --- | --- |
| JP 2000-158101 A | 13 June 2000 | (Family: none) |
| JP 08-159664 A | 21 June 1996 | US 5700420 A entire text EP 750170 A1 CN 1140490 A WO 1996/017215 A1 |
| JP 07-308741 A | 28 November 1995 | (Family: none) |
| JP 2003-266157 A | 24 September 2003 | (Family: none) |
| JP 2020-032442 A | 05 March 2020 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4238656 A
- JP H7299548 A
- JP 2010024531 A
- JP 2010253485 A
- JP H4143047 A

**Non-patent literature cited in the description**

- Steel Refining. Maruzen, 2000